# EUROPÄISCHE PATENTSCHRIFT

(11) **EP 2 897 851 B1**
(45) Veröffentlichungstag und Bekanntmachung des Hinweises auf die Patenterteilung: **31.05.2017**
(21) Anmeldenummer: 13745098.7
(22) Anmeldetag: 05.08.2013
(51) Int. Cl.: B62D 11/18

(54) **KETTENFAHRZEUG**
CRAWLER-TYPE VEHICLE
VÉHICULE À CHENILLES

(30) Priorität: 18.09.2012 DE 102012216661
(43) Veröffentlichungstag der Anmeldung: 29.07.2015
(73) Patentinhaber: ZF Friedrichshafen AG, 88046 Friedrichshafen (DE)
(72) Erfinder: BOSS, Ralf, 88079 Kressbronn (DE); UNSELD, Bernd, 88213 Ravensburg (DE); KLUMPP, Achim, 88368 Bergatreute (DE)
(86) Internationale Anmeldenummer: PCT/EP2013/066355
(87) Internationale Veröffentlichungsnummer: WO 2014/044457

(56) Entgegenhaltungen:
- WO-A1-2011/003214
- US-A- 2 393 557
- US-A- 4 882 947

## Beschreibung

Die vorliegende Erfindung betrifft ein Kettenfahrzeug mit einer Antriebseinheit und mit einem Lenkgetriebe gemäß der im Oberbegriff des Patentanspruches 1 näher definierten Art.

Beispielsweise aus der Druckschrift DE 42 30 534 A1 ist ein Antrieb für ein geschwindigkeitsdifferenz-gelenktes Fahrzeug mit auf einer Aufstandsfläche abwälzenden Laufwerken, insbesondere Raupenlaufwerken bzw. Ketten bekannt. Das Fahrzeug umfasst einen Antriebsmotor, der ein Verzweigungs- bzw. Verbindergetriebe antreibt, welches wiederum ein Gangwechselgetriebe und die beiden Zusatzantriebe antreibt. Über den Getriebeausgang des Gangwechselgetriebes werden die beiden Umlenkrollen der Raupen- bzw. Kettenlaufwerke angetrieben. Ferner ist jedem Kettenlaufwerk ein Summierungsgetriebe als Lenkgetriebe zugeordnet. Bei dem bekannten Antrieb werden der Antriebsmotor mit den Getriebekomponenten, bestehend aus dem Verzweigungsgetriebe zum Abzweig des Antriebes für die Zusatzantriebe, dem Gangwechselgetriebe, dem Hauptgetriebeausgang und den Summierungsgetrieben, zu einem Block zusammengefasst. Somit wird ein so genanntes Power-Pack bestehend aus Motor und Getriebe sowie Lenkgetriebe gebildet. Die konzentrierte Massendichte des Power-Packs verursacht in nachteiliger Weise eine Verschiebung des Schwerpunktes bei dem Fahrzeug, wenn es im Fahrzeugheck oder Fahrzeugbug eingebaut wird. Zudem verhindert das im Heck eingebaute Power-Pack einen heckseitigen Zustieg der Besatzung des Fahrzeuges. Wenn das Power-Pack im Bug des Fahrzeuges eingebaut ist, befindet sich der kettenseitige Endantrieb üblicherweise ebenfalls im Bug und wirkt sich somit ungünstig auf die Kettenbeanspruchung und auf den Kettenverschleiß aus. Des Weiteren zeigt Dokument US4882947 die Präambel des Anspruchs 1. Der vorliegenden Erfindung liegt die Aufgabe zu Grunde, ein Kettenfahrzeug der eingangs beschriebenen Gattung vorzuschlagen, bei dem eine optimierte Gewichtsverteilung bei möglichst kompakter Bauweise ermöglicht wird und die zirkulierenden Leistungen durch möglichst wenige und effiziente Getriebebaugruppen in unmittelbarer Nähe der Endantriebe fließt.

Diese Aufgabe wird erfingdungsgemäß durch die Merkmale des Patentanspruches 1 gelöst, wobei sich vorteilhafte Ausgestaltungen aus den Unteransprüchen, der Beschreibung und den Zeichnungen ergeben.

Es wird ein Kettenfahrzeug mit einem mechanischen Antriebsmotor und mit zumindest einer Pumpe zur hydraulischen Leistungsversorgung zumindest eines Hydromotors vorgeschlagen, wobei der Antriebsmotor mit einem Schaltgetriebe gekoppelt ist, und wobei zumindest ein Lenkgetriebe vorgesehen ist, welches mit Endantrieben jeder Kette gekoppelt ist. Erfindungsgemäß ist der Antriebsmotor, das Schaltgetriebe und die Pumpe als Antriebseinheit räumlich getrennt von dem Lenkgetriebe angeordnet. Durch die aufgelöste Bauweise des bekannten Lenkschaltgetriebes entstehen Freiheitsgrade hinsichtlich einer Ausbalancierung der vorgesehenen Antriebs- und Getriebekomponenten bei dem vorgeschlagenen Kettenfahrzeug, insbesondere auch bei amphibischen Fahrzeugen. Dadurch, dass das Lenkgetriebe dem Kettenantrieb zugeordnet ist, kann je nachdem, ob ein heckseitiger oder bugseitiger Kettenantrieb vorgesehen ist, die Antriebseinheit mit dem Schaltgetriebe dann entweder bugseitig oder heckseitig zum Gewichtsausgleich und zur optimalen Gewichtsverteilung bei dem Fahrzeug angeordnet werden. Erfindungsgemäß ist vorgesehen, dass das Lenkgetriebe mit seinen jedem Endantrieb zugeordneten Summierungsgetrieben heckseitig an dem Kettenfahrzeug angeordnet wird, und die Antriebseinheit bei heckseitigem Antrieb in Fahrtrichtung bugseitig an dem Kettenfahrzeug vorgesehen wird, so dass trotz des bezüglich der Kettenbeanspruchung und des Kettenverschleißes vorteilhaften heckseitigen Kettenantriebes ein geschützter Zustieg der Besatzung von hinten bzw. heckseitig möglich ist, wie dies bei einem Schützenpanzer gewünscht wird.

Bei der separaten Anordnung des Lenkgetriebes im Heck des Kettenfahrzeuges kann die die beiden Summierungsgetriebe verbindende Zentralwelle und die die beiden Hydromotoren verbindende Nullwelle möglichst bodennah angeordnet werden, welches insbesondere bei einem als Schützenpanzer ausgebildeten Kettenfahrzeug aufgrund des heckseitigen Zuganges besonders vorteilhaft ist. Beispielsweise können die vorgesehenen Summierungsgetriebe einem oder mehreren Lenkgetrieben zugeordnet bzw. in diesen untergebracht sein.

Ein weiterer Vorteil aus der separaten Anordnung von Antriebseinheit und Endantrieb nahem Lenkgetriebe ergibt sich daraus, dass die Übertragung von Fahr- und Lenkleistung von der Antriebseinheit nicht durch zusätzliche Winkelgetriebe erfolgt, sondern direkt über eine Abtriebswelle auf eine Zentralwelle des Lenkgetriebes realisiert wird, wobei die Zentralwelle mit den Summierungsgetrieben des Lenkgetriebes verbunden ist. Dadurch ergibt sich bei dieser erfindungsgemäßen Art der Anordnung ein verlustarmer Blindleistungsfluss, da der Blindleistungsfluss ausschließlich über die Stirnradstufen im Lenkgetriebe und nicht über Winkelgetriebe zirkuliert. Darüber hinaus wird durch die geteilte Anordnung eine kompaktere Bauweise realisiert, da keine überdimensionierten Baugruppen erforderlich sind. Somit ergibt sich ein größeres Transportvolumen bei dem erfindungsgemäßen Kettenfahrzeug.

Des Weiteren ist aufgrund der Trennung von Fahr- bzw. Schaltgetriebe und Lenkgetriebe bei dem erfindungsgemäßen Kettenfahrzeug kein individuelles kostenintensives Lenkschaltgetriebe erforderlich, sondern es können in vorteilhafter Weise kostengünstige Komponenten von anderen Nutzfahrzeugen eingesetzt werden.

Um beispielsweise bei amphibischen Kettenfahrzeugen eine kontrollierte Kettengeschwindigkeit beim Anlanden zu ermöglichen, kann bei dem erfindungsgemäßen Kettenfahrzeug eine trennbare Nullwelle vorgesehen sein, so dass die Kettendrehzahl über die beiden Lenkmotoren bzw. Hydromotoren unabhängig von dem Antriebsmotor zum Beispiel zum Anlanden nach einer Schwimmfahrt eingestellt werden kann. Die trennbare Nullwelle zum vom mechanischen Antrieb unabhängigen hydraulischen Antrieb kann beispielsweise durch die Verwendung eines Schaltelements, wie z.B. einer Kupplung oder dergleichen realisiert werden. Für die Ausführung von Lenkbewegungen bei dem Kettenfahrzeug ist jedoch nur ein der Nullwelle zugeordneter Hydromotor erforderlich.

Darüber hinaus ergibt sich bei dem erfindungsgemäßen Kettenfahrzeug der weitere Vorteil, dass mehrere evtl. erforderliche Nebenabtriebsstellen an der Antriebseinheit beispielsweise durch die Verwendung eines Stirnverbindergetriebes ohne weiteres vorgesehen werden können. Beispielsweise können als Nebenabtrieb Nebenverbraucher, Lenkpumpen, Lüfterantriebe, elektrische Generatoren oder dergleichen realisiert werden.

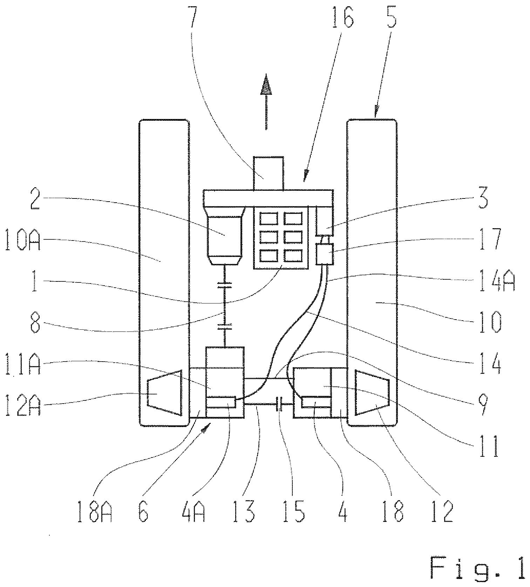

Nachfolgend wird die vorliegende Erfindung anhand der Zeichnungen weiter erläutert. Die einzige Figur der Erfindung zeigt eine mögliche Ausführungsvariante eines erfindungsgemäßen Kettenfahrzeuges 5 mit einer aufgelösten Bauweise zwischen Antriebseinheit 16 und Lenkgetriebe 6.

Bei der exemplarisch dargestellten Ausführungsvariante umfasst die Antriebseinheit 16 einen Antriebsmotor 1 als mechanischen Fahrantrieb, ein mit dem Antriebsmotor 1 gekoppeltes Schaltgetriebe 2 und eine hydraulische Pumpe bzw. Verstellpumpe 3 zur hydraulischen Leistungsversorgung zumindest eines Hydromotors 4, 4A, wobei die Antriebseinheit 16 etwa mittig an dem Kettenfahrzeug 5 vorgesehen ist. Die Vorwärts-Fahrrichtung des Kettenfahrzeuges 5 ist mittels Pfeil angedeutet, um Bugseite und Heckseite des Kettenfahrzeuges festzulegen. Das Lenkgetriebe 6 ist bei dem erfindungsgemäßen Kettenfahrzeug 5 zum heckseitigen Kettenantrieb im Heck des Kettenfahrzeuges 5 räumlich von der Antriebseinheit 16 getrennt angeordnet. An dem Antriebsmotor 1 ist ferner zumindest ein Nebenabtrieb 7 vorgesehen.

Als mechanische Verbindung zwischen der mittig angeordneten Antriebseinheit 16 und dem Lenkgetriebe 6 ist eine Abtriebswelle 8 des Schaltgetriebes 2 direkt mit einer Zentralwelle 9 des Lenkgetriebes 6 verbunden. Das Lenkgetriebe 6 umfasst als Endantrieb für jede Kette 10, 10A jeweils ein Summierungsgetriebe 11, 11A, die jeweils als Planetengetriebe ausgeführt sind. Jedes Hohlrad der Summierungsgetriebe 11, 11A ist mit der Zentralwelle 9 verbunden, so dass beide Summierungsgetriebe 11, 11 A über die Zentralwelle 9 mit gleicher Drehzahl beaufschlagt werden. Als Abtrieb ist jeder Planetenradträger der Summierungsgetriebe 11, 11 A mit dem Endantrieb 12, 12A der zugeordneten Kette 10, 10A verbunden. Jedes Sonnenrad der Summierungsgetriebe 11, 11 A ist über eine Nullwelle 13 mit einem zugeordneten Hydromotor 4, 4 A verbunden, wobei zwischen einem der Sonnenräder und der Nullwelle 13 ein Zwischenrad zur Drehrichtungsumkehr angeordnet ist, so dass zum Lenken des Kettenfahrzeug 5 eine vorbestimmte Drehzahl an den Sonnenrädern über zumindest einen Hydromotor 4, 4A vorgegeben wird. Wenn eine Geradeausfahrt ohne Lenkbewegungen gewünscht ist, werden die Sonnenräder über die Nullwelle 13 festgehalten, so dass die mechanische Antriebsleistung über die Zentralwelle 9 und die Planetenradträger bzw. Stege der Summierungsgetriebe 11, 11 A auf die Endantriebe 12, 12A der Kettenantriebe übertragen wird. Zwischen den Summierungsgetrieben 11, 11A und den Endantrieben 12, 12A ist jeweils eine Betriebs- und Feststellbremse 18, 18A des Kettenfahrzeuges 5 vorgesehen.

Die vorgesehenen Hydromotoren 4, 4 A sind über Hydraulikleitungen 14, 14 A mit einer oder mehreren Verstellpumpen 3 zur hydraulischen Leistungsversorgung verbunden, wobei in der Figur beispielhaft ein hydraulischer Verteiler 17 zwischengeschaltet ist. Bei einer Ausführung mit zwei separaten Verstellpumpen zum Betreiben von jeweils einem der beiden Hydromotoren 4 und 4A wird kein hydraulischer Verteiler 17 benötigt. Die Verstellpumpe 3 bzw. die Verstellpumpen können auch als Lenkpumpen bezeichnet werden, da sie den Hydromotoren 4 und 4A die zum Lenken des Kettenfahrzeuges notwendige hydraulische Energie zur Verfügung stellen.

Die Nullwelle 13 ist über eine Kupplung 15 trennbar ausgeführt. Wenn, wie bei der Ausführungsvariante vorgesehen, jedem Summierungsgetriebe 11, 11 A jeweils ein Hydromotor 4, 4A zugeordnet ist, kann durch die Trennung bzw. Teilung der Nullwelle 13 bei aktivierter Kupplung 15 unabhängig von dem Antriebsmotor 1 auch ein rein hydraulischer Antrieb des Kettenfahrzeuges 5 erfolgen.

Bei der in der Figur dargestellten Ausführungsvariante ist ein heckseitiger Kettenantrieb vorgesehen, bei der die Zentralwelle 9 und die Nullwelle 13 möglichst bodentief angeordnet sind, so dass ein Zustieg von hinten bzw. heckseitig möglich ist, wie dies bei einem Schützenpanzer notwendig ist.

### Bezugszeichen

- 1: Antriebsmotor
- 2: Fahrgetriebe bzw. Schaltgetriebe
- 3: hydraulische Pumpe bzw. Verstellpumpe
- 4,4A: Hydromotor
- 5: Kettenfahrzeug
- 6: Lenkgetriebe
- 7: Nebenabtrieb
- 8: Abtriebswelle
- 9: Zentralwelle
- 10,10A: Kette
- 11,11A: Summierungsgetriebe
- 12,12A: Endantrieb
- 13: Nullwelle
- 14,14A: Hydraulikleitung
- 15: Kupplung
- 16: Antriebseinheit
- 17: Verteiler
- 18, 18A: Betriebsbremse und Feststellbremse

## Patentansprüche

1. Kettenfahrzeug (5) mit einem Antriebsmotor (1) als mechanischer Fahrantrieb, mit einem mit dem Antriebsmotor (1) gekoppelten Schaltgetriebe (2) und mit einem mit den Endantrieben (12, 12A) jeder Kette (10, 10A) gekoppelten Lenkgetriebe (6) sowie mit zumindest einer Pumpe (3) zur hydraulischen Leistungsversorgung zumindest eines Hydromotors (4, 4A) des Lenkgetriebes (6), wobei der Antriebsmotor (1), das Schaltgetriebe (2) und die Pumpe (3) als Antriebseinheit (16) getrennt von dem Lenkgetriebe (6) angeordnet sind,
**dadurch gekennzeichnet, dass** die Antriebseinheit (16) bei heckseitigem Abtrieb, in Fahrtrichtung bugseitig an dem Kettenfahrzeug (5) angeordnet ist, dass das Lenkgetriebe mit mit jedem Endantrieb gekoppelten Summierungsgetrieben (11, 11A) heckseitig an dem Kettenfahrzeug (5) angeordnet ist, und dass jedes Summierungsgetriebe (11, 11A) als Planetengetriebe ausgeführt ist, wobei das Hohlrad jedes Planetengetriebes mit einer Zentralwelle (9) des Lenkgetriebes (6), der Planetenradträger jedes Planetengetriebes mit dem Endantrieb der zugeordneten Kette (10, 10A) und das Sonnenrad jedes Planetengetriebes über eine Nullwelle (13) mit dem Hydromotor (4, 4A) verbunden sind, wobei zwischen einem der Sonnenräder und der Nullwelle (13) ein Zwischenrad zur Drehrichtungsumkehr vorgesehen ist.

2. Kettenfahrzeug nach Anspruch 1, **dadurch gekennzeichnet, dass** das Schaltgetriebe (2) über eine Abtriebswelle (8) mit der Zentralwelle (9) zur Übertragung der mechanischen Antriebsleistung und die Pumpe (3) direkt oder indirekt mit den Hydromotoren (4, 4A) zur Übertragung der hydraulischen Leistung verbunden sind.

3. Kettenfahrzeug nach Anspruch 1 oder 2, **dadurch gekennzeichnet, dass** die Zentralwelle (9) und die Nullwelle (13) bodennah angeordnet sind.

4. Kettenfahrzeug nach einem der vorangehenden Ansprüche, **dadurch gekennzeichnet, dass** eine trennbare Nullwelle (13) zum vom mechanischen Antrieb unabhängigen hydraulischen Antrieb vorgesehen ist.

5. Kettenfahrzeug nach einem der vorangehenden Ansprüche, **dadurch gekennzeichnet, dass** die Antriebseinheit (16) zumindest einen Nebenabtrieb (7) umfasst.

## Claims

1. Crawler-type vehicle (5) having a drive engine (1) as mechanical traction drive, having a speed-change gearbox (2) coupled to the drive engine (1), and having a steering gear (6) connected to the final drives (12, 12A) of each crawler chain (10, 10A), and having at least one pump (3) for the hydraulic supply of power to at least hydraulic motor (4, 4A) of the steering gear (6), wherein the drive engine (1), the speed-change gearbox (2) and the pump (3) are arranged, as a drive unit (16), separately from the steering gear (6),
**characterized in that** the drive unit (16) is, in the case of a rear-end drive output configuration, arranged on the crawler-type vehicle (5) at the front end in the direction of travel, **in that** the steering gear is arranged, with summation gearings (11, 11A) coupled to each final drive, at the rear side on the crawler-type vehicle (5), and **in that** each summation gearing (11, 11A) is in the form of a planetary gearing, wherein the internal gear of each planetary gearing is connected to a central shaft (9) of the steering gear (6), the planet gear carrier of each planetary gearing is connected to the final drive of the associated crawler chain (10, 10A), and the sun gear of each planetary gearing is connected via a zero shaft (13) to the hydraulic motor (4, 4A), wherein an intermediate gear for reversal of direction of rotation is provided between one of the sun gears and the zero shaft (13).

2. Crawler-type vehicle according to Claim 1, **characterized in that** the speed-change gearbox (2) is connected via a drive-output shaft (8) to the central shaft (9) for the transmission of the mechanical drive power, and the pump (3) is connected directly or indirectly to the hydraulic motors (4, 4A) for the transmission of the hydraulic power.

3. Crawler-type vehicle according to Claim 1 or 2, **characterized in that** the central shaft (9) and the zero shaft (13) are arranged close to ground level.

4. Crawler-type vehicle according to one of the preceding claims, **characterized in that** a separable zero shaft (13) is provided for hydraulic drive independent of the mechanical drive.

5. Crawler-type vehicle according to one of the preceding claims, **characterized in that** the drive unit (16) comprises at least one power takeoff (7).

## Revendications

1. Véhicule à chenilles (5) comprenant un moteur d'entraînement (1) en tant qu'entraînement de conduite mécanique, comprenant une boîte de vitesses (2) accouplée au moteur d'entraînement (1) et comprenant un mécanisme de direction (6) accouplé aux entraînements d'extrémité (12, 12A) de chaque chenille (10, 10A), ainsi qu'au moins une pompe (3) pour l'alimentation en puissance hydraulique d'au moins un moteur hydraulique (4, 4A) du mécanisme de direction (6), le moteur d'entraînement (1), la boîte de vitesses (2) et la pompe (3) étant disposés en tant qu'unité d'entraînement (16) de manière séparée du mécanisme de direction (6),
**caractérisé en ce que** l'unité d'entraînement (16), lorsque la prise de force est du côté arrière, est disposée dans la direction de conduite du côté avant au niveau du véhicule à chenilles (5), **en ce que** le mécanisme de direction est disposé avec les mécanismes de sommation (11, 11A) accouplés à chaque entraînement d'extrémité du côté arrière au niveau du véhicule à chenilles (5), et **en ce que** chaque mécanisme de sommation (11, 11A) est réalisé en tant que transmission planétaire, la couronne dentée de chaque transmission planétaire étant connectée à un arbre central (9) du mécanisme de direction (6), le porte-satellites de chaque transmission planétaire étant connecté à l'entraînement d'extrémité de la chenille associée (10, 10A) et la roue solaire de chaque transmission planétaire étant connectée par un arbre neutre (13) au moteur hydraulique (4, 4A), une roue intermédiaire étant prévue pour l'inversion du sens de rotation entre l'une des roues solaires et l'arbre neutre (13).

2. Véhicule à chenilles selon la revendication 1, **caractérisé en ce que** la boîte de vitesses (2) est connectée par le biais d'un arbre de prise de force (8) à l'arbre central (9) pour le transfert de la puissance d'entraînement mécanique et la pompe (3) est connectée directement ou indirectement aux moteurs hydrauliques (4, 4A) pour le transfert de la puissance hydraulique.

3. Véhicule à chenilles selon la revendication 1 ou 2, **caractérisé en ce que** l'arbre central (9) et l'arbre neutre (13) sont disposés à proximité du sol.

4. Véhicule à chenilles selon l'une quelconque des revendications précédentes, **caractérisé en ce qu'**un arbre neutre séparable (13) est prévu pour l'entraînement hydraulique indépendant de l'entraînement mécanique.

5. Véhicule à chenilles selon l'une quelconque des revendications précédentes, **caractérisé en ce que** l'unité d'entraînement (16) comprend au moins une prise de force secondaire (7).
